# FASCICULE DE BREVET EUROPEEN

(11) **EP 3 981 671 B1**
(45) Date de publication et mention de la délivrance du brevet: **28.01.2026**
(21) Numéro de dépôt: 21201111.8
(22) Date de dépôt: 06.10.2021
(51) Int. Cl.: B62D 25/20, B62D 27/02, B62D 24/02, B62D 27/04

(54) **ASSEMBLAGE DE DÉCOUPLAGE POUR UN PLANCHER DE VÉHICULE DE TRANSPORT PUBLIC**
ENTKOPPELUNGSANORDNUNG FÜR DEN BODEN EINES ÖFFENTLICHEN VERKEHRSMITTELS
UNCOUPLING ASSEMBLY FOR A FLOOR OF A PUBLIC TRANSPORT VEHICLE

(30) Priorité: 06.10.2020 FR 2010196
(43) Date de publication de la demande: 13.04.2022
(73) Titulaire: SpeedInnov, 75008 Paris (FR)
(72) Inventeur: LOUMEAUD, Arnaud, 17430 TONNAY CHARENTE (FR); LANOE, Stéphane, 17000 LA ROCHELLE (FR)
(74) Mandataire: Plasseraud IP

(56) Documents cités:
- EP-A1- 3 115 260
- EP-A1- 3 508 393
- EP-A2- 1 193 165
- DE-A1- 102019 209 814
- DE-A1- 19 916 304
- US-A1- 2013 164 094

## Description

La présente invention concerne un assemblage de découplage pour un plancher de véhicule de transport public.

On connaît des assemblages de découplage pour un plancher de véhicule de transport public comprenant un plot comportant une première pièce métallique fixée au plancher et une deuxième pièce métallique fixée par collage à une structure de véhicule accueillant le plancher.

Cependant, une telle installation nécessite au préalable de nettoyer et dégraisser les surfaces de la structure et des plots de découplage à coller entre elles, puis de lester la surface du plancher pendant la durée de polymérisation de la colle, qui dure généralement 24 heures.

Le lestage du plancher implique des risques pour la sécurité des opérateurs inhérents au déplacement de charges lourdes.

Le collage implique aussi le respect de conditions de température et d'hygrométrie de mise en oeuvre.

Il existe donc un besoin pour une installation plus rapide et moins fastidieuse, tout en assurant une fixation robuste du plancher à la structure.

A cet effet, l'invention a pour objet une voiture de véhicule de transport public selon la revendication 1.

Selon un mode de réalisation particulier, la première pièce métallique est assemblée au plancher par des vis et la deuxième pièce métallique est assemblé à la structure par des rivets.

L'invention sera mieux comprise à la lumière de la description qui va suivre, donnée uniquement à titre d'exemple et faite en se référant aux figures annexées, parmi lesquelles :
[Fig 1] La Figure 1 est une vue schématique de dessus d'un plancher comprenant une pluralité d'assemblages de découplage selon l'invention ;
[Fig 2] La Figure 2 est une vue schématique en perspective éclatée d'un assemblage de découplage selon l'invention ; et
[Fig 3] La Figure 3 est une vue schématique en coupe transversale de l'assemblage de découplage de la Figure 2 une fois assemblé.

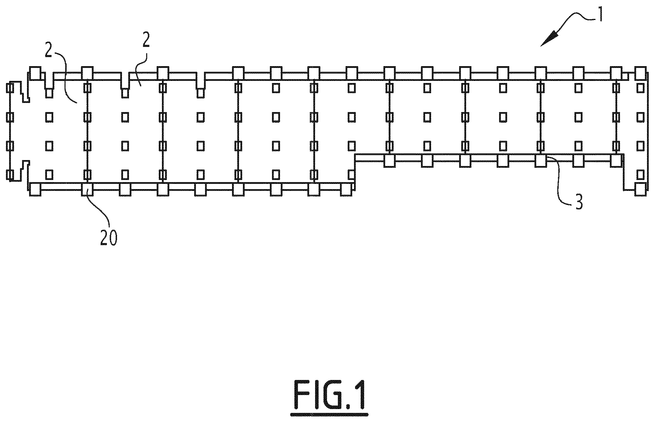

On a représenté, sur la Figure 1, un plancher 1 pour un véhicule de transport public.

Dans la suite de la description, les termes « véhicule de transport public » comprennent un véhicule ferroviaire, un véhicule terrestre guidé, un autobus, un véhicule naval.

De préférence, le véhicule de transport public est un véhicule ferroviaire à deux étages.

Par la suite, les termes « haut », « bas », « sur » et « sous » sont à entendre par rapport au sens usuel d'un véhicule de transport public.

Le plancher 1 comprend une pluralité de panneaux 2.

Dans l'exemple représenté sur la Figure 1, le plancher 1 comprend neuf panneaux 2.

Les panneaux 2 sont par exemple réalisés en contre-plaqué ou composite aluminium.

Les panneaux 2 sont juxtaposés.

Chaque panneau 2 présente au moins une zone de fixation 3 au panneau 2 voisin.

Dans la zone de fixation 3, le panneau 2 présente une entaille 4 et une pièce de fixation 5, par exemple présentant un profil en forme de S, s'étendant depuis le panneau 2 dans l'entaille 4.

La pièce de fixation 5 est percée d'un orifice 6 traversant.

Les zones de fixation 3 de deux panneaux 2 voisins sont de préférence symétriques par rapport à un plan vertical s'étendant entre les deux panneaux 2.

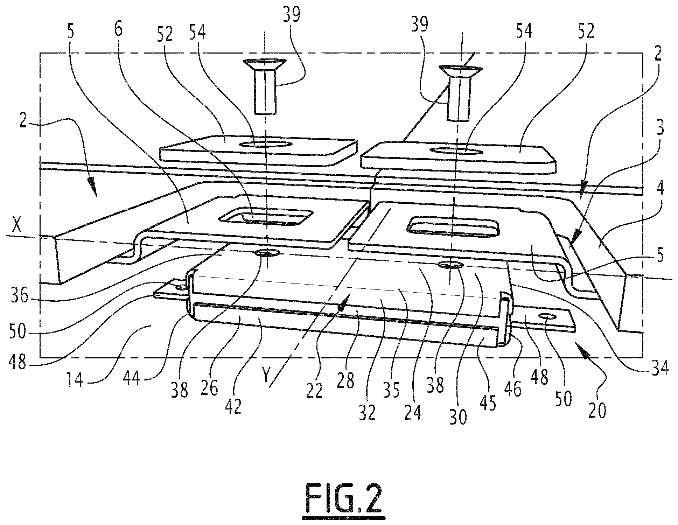

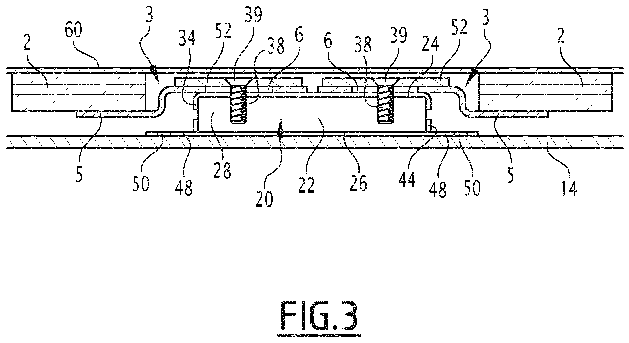

Ainsi, les deux pièces de fixation 5 des deux panneaux 2 voisins se font face, comme cela est représenté sur les Figures 2 et 3.

Les panneaux 2 sont assemblés dans la zone de fixation 3 entre eux et à une structure 14 du véhicule de transport public, au moyen d'au moins un assemblage 20 de découplage.

Dans l'exemple représenté sur la Figure 1, le plancher 1 comprend trente-deux assemblages 20 de découplage.

Par la suite, on s'attache à décrire un assemblage 20 de découplage, la description s'appliquant à l'ensemble des assemblages 20 de découplage du plancher 1 de la Figure 1.

L'assemblage 20 de découplage comprend un plot 22.

Le plot 22 assure le découplage entre le plancher 1 et la structure 14 et permet d'absorber les tolérances de montage du plancher 1 du véhicule.

Le plot 22 comporte une première pièce métallique 24 fixée au plancher 1 (et plus particulièrement, fixée à la pièce de fixation 5 de l'un des panneaux 2), une deuxième pièce métallique 26 fixée à la structure 14, et un élément 28 de découplage intercalé entre la première pièce métallique 24 et la deuxième pièce métallique 26.

La première pièce métallique 24 présente par exemple une forme sensiblement rectangulaire s'étendant principalement suivant une direction longitudinale. La première pièce métallique 24 est typiquement formée d'une tôle et comprend une partie centrale 30 bordée par des bords longitudinaux 32 et transversaux 34.

La partie centrale 30 comprend deux grands côtés 35 opposés et deux petits côtés 36 opposés.

Par exemple, chaque grand côté 35 présente une longueur comprise entre 90 mm et 100 mm.

Par exemple, chaque petit côté 36 présente une largeur comprise entre 50 mm et 60 mm.

La première pièce métallique 24 est par exemple réalisée en acier inoxydable ou en acier protégé.

Les bords longitudinaux 32 et transversaux 34 sont par exemple formés en repliant la tôle à ses extrémités.

Lorsque la première pièce métallique 24 est assemblée au plancher 1, les bords longitudinaux 32 et transversaux 34 sont orientés vers le bas.

La partie centrale 30 de la première pièce métallique 24 est percée de deux orifices 38 de passage d'un premier moyen de fixation 39 de la première pièce métallique 24 au plancher 1.

Par exemple, le premier moyen de fixation 39 est une vis.

Les orifices 38 sont traversants.

Les orifices 38 sont de préférence alignés le long d'un axe X longitudinal séparant la première pièce métallique 24 en deux moitiés longitudinales identiques.

Les orifices 38 sont de préférence placés à équidistance d'un axe Y transversal séparant la première pièce métallique 24 en deux moitiés transversales identiques.

En variante, la première pièce métallique 24 est percée d'un nombre d'orifices 38 différent.

La deuxième pièce métallique 26 présente par exemple une forme sensiblement rectangulaire s'étendant principalement suivant une direction longitudinale.

La deuxième pièce métallique 26 est typiquement formée d'une tôle et comprend une partie centrale 40 bordée par des bords longitudinaux 42 et transversaux 44.

La partie centrale 40 comprend deux grands côtés 45 opposés et deux petits côtés 46 opposés.

Par exemple, chaque grand côté 45 présente une longueur comprise entre 90 mm et 100 mm.

Par exemple, chaque petit côté 46 présente une largeur comprise entre 50 mm et 60 mm.

De préférence, les dimensions des grands côtés 45 et des petits côtés 46 de la deuxième pièce métallique 26 sont égales aux dimensions des grands côtés 35 et, respectivement, des petits côtés 36 de la première pièce métallique 24.

La deuxième pièce métallique 26 est par exemple réalisée en acier inoxydable ou en acier protégé.

Les bords longitudinaux 42 et transversaux 44 sont par exemple formés en repliant la tôle à ses extrémités.

Lorsque la deuxième pièce métallique 26 est assemblée au plancher 1, les bords longitudinaux 42 et transversaux 44 sont orientés vers le haut.

De préférence, la partie centrale 40 de la deuxième pièce métallique 26 est dépourvue d'orifices.

La deuxième pièce métallique 26 comprend deux parties 48 de fixation de la deuxième pièce métallique 26 à la structure 14. Les parties de fixation 48 sont par exemple formée par des pattes de fixation.

Les deux pattes 48 de fixation s'étendent dans des directions opposées.

Chaque patte 48 de fixation s'étend longitudinalement depuis un petit côté respectif de la deuxième pièce métallique 26.

Chaque patte 48 de fixation comprend par exemple un orifice 50 de passage d'un second moyen de fixation de la deuxième pièce métallique 26 à la structure 14.

Par exemple, le second moyen de fixation est un rivet.

La deuxième pièce métallique 26 peut ainsi être fixée à la structure 14 de façon robuste, et la durée de montage est considérablement réduite par rapport à la durée de polymérisation d'une colle. Il n'est pas nécessaire de régler précisément la position des plots 22, comme cela sera décrit ultérieurement.

L'élément 28 de découplage est réalisé dans un matériau résilient.

Par exemple, l'élément 28 de découplage est réalisé en élastomère, en silicone ou en caoutchouc.

L'élément 28 de découplage est intercalé entre la première pièce métallique 24 et la deuxième pièce métallique 26.

L'élément 28 de découplage est par exemple assemblé par collage à la première pièce métallique 24 et à la deuxième pièce métallique 26.

Typiquement, l'élément 28 de découplage est maintenu entre les bords longitudinaux 32 et transversaux 34 de la première pièce métallique 24 d'une part, et entre les bords longitudinaux 42 et transversaux 44 de la deuxième pièce métallique 26 d'autre part.

Le plot 22 présente par exemple une hauteur, définie par l'empilement de la première pièce métallique 24, de l'élément 28 de découplage et de la deuxième pièce métallique 26, comprise entre 10 mm et 20 mm.

Avantageusement, l'assemblage 20 de découplage comprend au moins une platine 52 de fixation de la première pièce métallique 24 au plancher 1.

De préférence, l'assemblage 20 de découplage comprend deux platines 52 de fixation de la première pièce métallique 24 au plancher 1.

Chaque platine 52 présente par exemple une forme sensiblement parallélépipédique à bords arrondis.

Chaque platine 52 est destinée à reposer sur une pièce de fixation 5. De préférence, chaque platine est dimensionnée de sorte que, une fois en place, les panneaux 2 de plancher et la platine 52 affleurent au même niveau. Par exemple, chaque platine 52 présente typiquement une épaisseur comprise entre 2 mm et 3 mm.

Chaque platine 52 est percée d'un orifice 54 traversant de passage de l'un respectif des premiers moyens de fixation 39.

Plus particulièrement, l'orifice 54 est placé en vis-à-vis de l'un des orifices 38 de la première pièce métallique 24.

De préférence, l'orifice 54 de chaque platine 52 présente des dimensions supérieures aux dimensions de chaque orifice 38 de la première pièce métallique 24. Par exemple, l'orifice 54 présente une forme oblongue, afin de faciliter la mise en place de la platine 52 vis-à-vis de la première pièce métallique 24.

Cela permet de prendre en compte des dispersions de montage quand les orifices 38 et 54 sont traversés par le premier moyen de fixation 39.

L'orifice 54 est placé en vis-à-vis de l'orifice 6 de la pièce de fixation 5 du panneau 2 correspondant.

La pièce de fixation 5 du panneau 2 est enserrée entre la première pièce métallique 24 et la platine 52 de fixation de la première pièce métallique 24 audit panneau 2.

Grâce à l'assemblage 20 de découplage selon l'invention, le plancher 1 est fixé de façon robuste à la structure 14 tout en étant découplé de cette structure. De plus, la fixation amovible du plancher 1 aux plots 22 permet de modifier la configuration du plancher 1 selon les conditions opérationnelles. Le nombre de références différentes de panneaux 2 plancher est ainsi réduit.

Un procédé de montage d'un assemblage 20 de découplage va maintenant être décrit.

Le procédé de montage comprend la fixation de la première pièce métallique 24 au plancher 1, et la fixation par rivetage de la deuxième pièce métallique 26 à la structure 14 destinée à accueillir le plancher 1.

Chaque plot 22 est assemblé à la structure 14 par les pattes 48 de fixation de la deuxième pièce métallique 26.

Puis deux panneaux 2 de plancher sont juxtaposés, les zones de fixation 3 de chacun des deux panneaux 2 se faisant face.

L'orifice 6 de chaque pièce de fixation 5 est placé en vis-à-vis de l'orifice 38 correspondant de la première pièce métallique 24.

Les deux platines 52 sont déposées sur les deux pièces de fixation 5.

L'orifice 54 de chaque platine 52 est placé en vis-à-vis de l'orifice 38 correspondant de la première pièce métallique 24.

Une vis 39 est insérée dans chaque orifice 38 de la première pièce métallique 24 en traversant l'orifice 54 de la platine 52 et l'orifice 6 de la pièce de fixation 5.

Optionnellement, une tôle 60 de fermeture recouvre au moins les zones de fixation 3 du plancher 1.

Les deux panneaux 2 de plancher sont ainsi fixés entre eux et à la structure 14 par l'intermédiaire du plot 22.

Le procédé de montage selon l'invention permet un gain de temps de montage important. Notamment, le procédé ne nécessite pas de dégraissage des surfaces à coller, de collage, de lest à installer et à désinstaller sur le plancher, de temps d'attente de polymérisation de la colle et par conséquent de temps d'immobilisation du véhicule sans pouvoir y travailler.

On notera que l'invention n'est pas limitée au mode de réalisation précédemment décrit, mais pourrait présenter diverses variantes supplémentaires.

## Revendications

1. Voiture de véhicule de transport public comprenant un plancher (1) formé d'une pluralité de panneaux (2) de plancher (1), et une structure (14), les panneaux (2) de plancher (1) étant assemblés entre eux et à la structure (14) à l'aide d'un assemblage (20)de découplage, l'assemblage (20) comprenant un plot (22) comportant une première pièce métallique (24) destinée à être fixée à un plancher (1), une deuxième pièce métallique (26) destinée à être fixée à une structure (14) de véhicule destinée à accueillir le plancher (1) et comprenant au moins une partie (48) de fixation à la structure (14), et un élément (28) de découplage intercalé entre la première pièce métallique (24) et la deuxième pièce métallique (26), **caractérisée en ce que** l'assemblage (20) comprend en outre au moins une platine (52) de fixation percée d'un orifice (54) traversant de passage d'un premier moyen de fixation (39) pour fixer la première pièce métallique (24) à un plancher (1), et **en ce que** le plancher (1) est pourvu d'au moins une pièce de fixation (5) percée d'un orifice (6) traversant de réception du premier moyen de fixation (39).

2. Voiture de véhicule de transport public selon la revendication 1, dans lequel la première pièce métallique (24) comprend au moins un orifice (38) de passage d'un premier moyen de fixation (39).

3. Voiture de véhicule de transport public selon la revendication 1 ou 2, dans lequel la deuxième pièce métallique (26) présente une forme sensiblement rectangulaire s'étendant principalement suivant une direction longitudinale, et comprend deux parties (48) de fixation opposées, chaque partie (48) de fixation s'étendant longitudinalement depuis un petit côté (46) de la deuxième pièce (26).

4. Voiture de véhicule de transport public selon l'une quelconque des revendications 1 à 3, comprenant, pour chaque plot (22), deux platines (52) de fixation percées chacune d'un orifice (54) traversant de passage d'un premier moyen de fixation (39) pour fixer la première pièce métallique (24) au plancher (1).

5. Voiture de véhicule de transport public selon la revendication 2 et la revendication 1 ou 3, dans lequel l'orifice (54) de chaque platine (52) de fixation présente des dimensions supérieures aux dimensions de l'orifice (38) de la première pièce métallique (24).

6. Voiture de véhicule de transport public selon l'une quelconque des revendications 1 à 5, dans laquelle la première pièce métallique (24) est assemblée au plancher (1) par des vis (39) et la deuxième pièce métallique (26) est assemblé à la structure (14) par des rivets.

## Patentansprüche

1. Wagen für öffentliche Verkehrsmittel, umfassend einen Boden (1), der aus einer Vielzahl von Platten (2) des Bodens (1) gebildet ist, und eine Struktur (14), wobei die Platten (2) des Bodens (1) untereinander und mit der Struktur (14) mittels einer Entkopplungsanordnung (20) verbunden sind, wobei die Anordnung (20) einen Bolzen (22) mit einem ersten Metallteil (24) zur Befestigung an einem Boden (1) und einem zweiten Metallteil (26) zur Befestigung an einer Fahrzeugstruktur (14) zur Aufnahme des Bodens (1) umfasst und mindestens ein Teil (48) zur Befestigung an der Struktur (14) aufweist, und ein Entkopplungselement (28), das zwischen dem ersten Metallteil (24) und dem zweiten Metallteil (26) angeordnet ist,
**dadurch gekennzeichnet, dass** die Anordnung (20) ferner mindestens eine Befestigungsplatte (52) umfasst, die mit einer Durchgangsöffnung (54) für ein erstes Befestigungsmittel (39) zur Befestigung des ersten Metallteils (24) an einem Boden (1) durchsetzt ist, und dass der Boden (1) mit mindestens einem Befestigungsteil (5) versehen ist, das mit einer Durchgangsöffnung (6) zur Aufnahme des ersten Befestigungsmittels (39) versehen ist.

2. Wagen für öffentliche Verkehrsmittel nach Anspruch 1, wobei das erste Metallteil (24) mindestens eine Durchgangsöffnung (38) für ein erstes Befestigungsmittel (39) aufweist.

3. Wagen für öffentliche Verkehrsmittel nach Anspruch 1 oder 2, wobei das zweite Metallteil (26) eine im Wesentlichen rechteckige Form aufweist, die sich hauptsächlich in Längsrichtung erstreckt, und zwei gegenüberliegende Befestigungsteile (48) umfasst, wobei sich jedes Befestigungsteil (48) in Längsrichtung von einer Schmalseite (46) des zweiten Teils (26) erstreckt.

4. Wagen für öffentliche Verkehrsmittel nach einem der Ansprüche 1 bis 3, der für jeden Bolzen (22) zwei Befestigungsplatten (52) umfasst, die jeweils mit einer Durchgangsöffnung (54) für ein erstes Befestigungsmittel (39) versehen sind, um das erste Metallteil (24) am Boden (1) zu befestigen.

5. Wagen für öffentliche Verkehrsmittel nach Anspruch 2 und Anspruch 1 oder 3, wobei die Öffnung (54) jeder Befestigungsplatte (52) größere Abmessungen als die Öffnung (38) des ersten Metallteils (24) aufweist.

6. Wagen für öffentliche Verkehrsmittel nach einem der Ansprüche 1 bis 5, wobei das erste Metallteil (24) mit dem Boden (1) durch Schrauben (39) und das zweite Metallteil (26) mit der Struktur (14) durch Nieten verbunden ist.

## Claims

1. Public transport vehicle comprising a floor (1) made up of a plurality of floor (1) panels (2), and a structure (14), the floor (1) panels (2) being assembled together and to the structure (14) using a decoupling assembly (20), the assembly (20) comprising a stud (22) comprising a first metal part (24) intended to be fastened to a floor (1), a second metal part (26) intended to be fastened to a vehicle structure (14) intended to accommodate the floor (1) and comprising at least one fastening part (48) for securing to the structure (14), and a decoupling element (28) interposed between the first metal part (24) and the second metal part (26), **characterised in that** the assembly (20) further comprises at least one fastening plate (52) pierced with a through-hole (54) through which a first fastening means (39) passes to secure the first metal part (24) to a floor (1), and **in that** the floor (1) is provided with at least one fastening part (5) pierced with a through-hole (6) for receiving the first fastening means (39).

2. Public transport vehicle according to claim 1, wherein the first metal part (24) comprises at least one hole (38) through which a first fastening means (39) passes.

3. Public transport vehicle according to claims 1 or 2, wherein the second metal part (26) has a substantially rectangular shape extending primarily in a longitudinal direction, and comprises two opposing fastening parts (48), each fastening part (48) extending longitudinally from a short side (46) of the second part (26).

4. Public transport vehicle according to any one of claims 1 to 3, comprising, for each stud (22), two fastening plates (52), each having a through-hole (54) through which a first fastening means (39) passes to secure the first metal part (24) to the floor (1).

5. Public transport vehicle according to claim 2 and claim 1 or 3, wherein the through-hole (54) of each fastening plate (52) has dimensions larger than those of the hole (38) of the first metal part (24).

6. Public transport vehicle according to any one of claims 1 to 5, wherein the first metal part (24) is attached to the floor (1) using screws (39) and the second metal part (26) is attached to the structure (14) using rivets.
